# EUROPÄISCHE PATENTANMELDUNG

(11) **EP 1 120 699 A2**
(43) Veröffentlichungstag der Anmeldung: **01.08.2001**
(21) Anmeldenummer: 00126839.0
(22) Anmeldetag: 07.12.2000
(51) Int. Cl.: G05D 23/02

(54) **Thermostatventil**

(30) Priorität: 29.01.2000 DE 20001605 U
(71) Anmelder: Conecterm GmbH, 33154 Salzkotten (DE)
(72) Erfinder: Kersting, Werner, 59558 Lippstadt (DE)
(74) Vertreter: Dörner, Lothar, Dipl.-Ing.

(57) **Zusammenfassung**

Thermostatventil mit einem Haltekopf (2), in das ein Regulierstück (24) geschraubt. Das Regulierstück (24) nimmt ein Druckstück (3) auf, das einerseits an einem Fühlerstift, andererseits an einem Thermostaten (4) anliegt. Der Thermostat (4) ist von einer Handradkappe (5) umgeben und weist ein Gehäuse (41) auf. Das Gehäuse (41) ist mit einer Befestigungsrille (43) versehen, in die Haltekrallen (245) des Regulierstücks (24) einrasten.

## Beschreibung

Die Erfindung betrifft ein Thermostatventil mit einem Haltekopf, in das ein Regulierstück geschraubt ist, welches ein Druckstück aufnimmt, das einerseits an einem Fühlerstift andererseits an einem Thermostaten anliegt, wobei der Thermostat von einer Handradkappe umgeben ist.

Thermostatventile bewirken die automatische Temperaturregelung von Raumheizkörpern. Sie enthalten aus diesem Grund einen vorzugsweise als den Stoffelement ausgebildeten Thermostaten, der auf ein Verschlusselement des Ventils einwirkt und dieses drosselt, schließt oder öffnet. Das Einstellen dieser thermostatisch gesteuerten Ventile erfolgt durch Drehen einer Handradkappe, die einen Einstellkörper in seiner Lage zum Ventil verstellt.

Thermostatventile der eingangs genannten Art sind an sich bekannt. Bei den bekannten Thermostatventilen bereitet oftmals die lagesichere Fixierung des Thermostaten Schwierigkeiten. Um die Fixierung zu gewährleisten sind daher vielfach aufwendige Konstruktionen erforderlich. So ist es beispielsweise aus der DE 80 20 318 U bekannt, bei einem Ventil mit Feststoff-Thermostaten in der Handradkappe eine Schraubenfeder vorzusehen. Die Schraubenfeder stützt sich einerseits am Kopf der Handradkappe, andererseits an einer Federplatte ab. Die Federplatte wiederum liegt auf einem Regulierstück auf und umfasst teilweise den Thermostaten. Eine vergleichbare Lösung ist darüber hinaus aus der DE 298 09 989 U ebenfalls für einen Feststoff-Thermostaten bekannt. Darüber hinaus ist bei Verwendung eines Flüssigkeits-Thermostaten das Vorsehen eines Formrings im Kopf der Handradkappe bekannt, gegen den sich das Gehäuse des Flüssigkeits-Thermostaten an seinem freien Ende abstützt. Der dem Formring abgewandte Teil des Gehäuses liegt auf dem Regulierstück auf (vgl. DE 80 20 318 U). Außerdem ist die Verwendung aufwendiger Haltekäfige zur Fixierung von Thermostaten bekannt.

Hier will die Erfindung Abhilfe schaffen. Der Erfindung liegt die Aufgabe zugrunde, ein Thermostatventil zu schaffen, bei dem die sichere Fixierung des Thermostaten auf einfache Weise gewährleistet ist. Gemäß der Erfindung wird diese Aufgabe dadurch gelöst, dass der Thermostat ein Gehäuse aufweist, das mit einer Befestigungsrille versehen ist, in die Haltekrallen des Regulierstücks einrasten.

Mit der Erfindung ist ein Thermostatventil geschaffen, bei dem die sichere Fixierung des Thermostaten gewährleistet ist. Gleichzeitig ist die Montage durch das Einrasten der Haltekrallen in die Befestigungsrille beim Einführen des Thermostaten in das Regulierstück wesentlich vereinfacht. Gleichzeitig ergibt sich eine Vereinfachung beim Austausch des Thermostaten, beispielsweise bei Wartungsarbeiten.

In Weiterbildung der Erfindung sind die Haltekrallen an Segmenten angeordnet. Durch das Vorsehen von Segmenten ist eine gewisse Federwirkung hervorgerufen, sodass beim Einführen des Thermostaten in das Regulierstück sich diese etwas nach Außen bewegen können, wodurch die Gefahr eines Abbrechens von Teilen des Regulierstücks reduziert ist.

Vorteilhaft weist das Regulierstück Zungen auf, die mit Rastnasen versehen sind. Mit Hilfe der Rastnasen ist eine zuverlässige und gleichzeitig einfache Befestigung des Handrades an dem Regulierstück hervorgerufen. Die Verwendung von Zungen ruft dabei eine begrenzte Nachgiebigkeit hervor, wodurch ebenfalls die Gefahr eines Abbrechens bei der Montage der Handradkappe reduziert ist.

In Ausgestaltung der Erfindung sind an dem Regulierstück Verdrehnocken angeformt, die sich an in der Handradkappe vorgesehenen Vorsprüngen abstützen. Durch diese Ausgestaltung ist zusätzlich eine sichere Übertragung einer auf die Handradkappe ausgeübten Drehbewegung auf das Regulierstück hervorgerufen.

Andere Ausgestaltungen und Weiterbildungen der Erfindung sind in den übrigen Unteransprüchen angegeben. Ein Ausführungsbeispiel der Erfindung ist in der Zeichnung dargestellt und wird nachfolgend im Einzelnen beschrieben. Es zeigen:

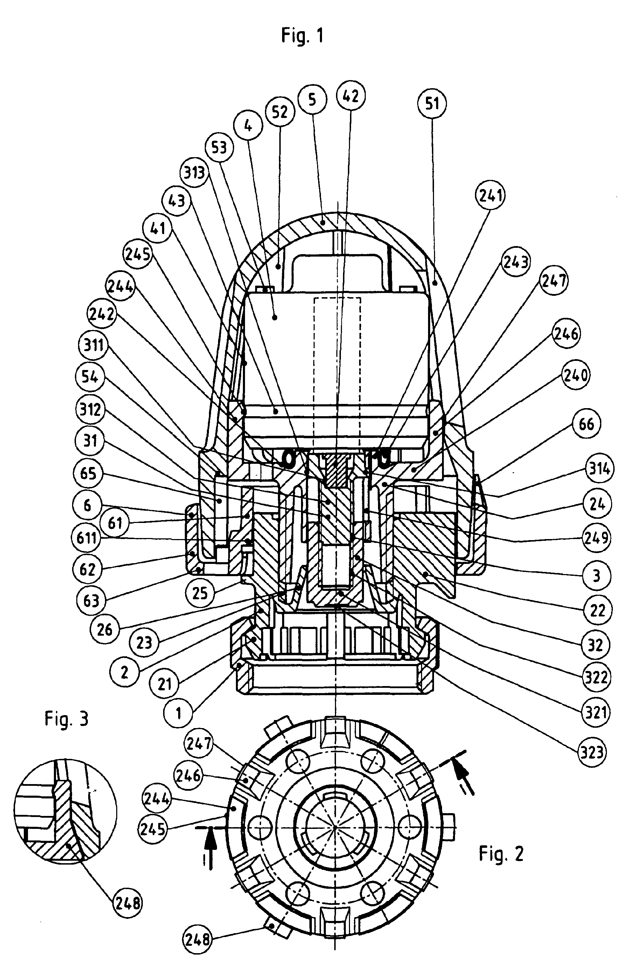

- Figur 1: einen Schnitt durch ein Thermostat-Ventil entlang der Linie 1-1 in Figur 2;
- Figur 2: die Draufsicht auf ein Regulierstück und
- Figur 3: eine ausschnittsweise Darstellung eines Schnittes durch das in Figur 1 dargestellte Thermostat-Ventil.

Thermostat-Ventile sind üblicherweise an ein Gehäuse angebaut, in dem ein Oberteil gehalten ist. In dem Oberteil ist in der Regel ein Fühlerstift geführt. Das Gehäuse ist an seinem dem Thermostat-Ventil zugewandten Ende mit einem Außengewinde versehen, auf das eine Überwurfmutter 1 geschraubt ist. Die Überwurfmutter 1 umgreift einen Haltekopf 2. Der Haltekopf 2 ist dadurch in einer Art an dem Gehäuse befestigt, das ein Druckstück 3 an dem Fühlerstift anliegt. Das Druckstück 3 liegt andererseits an einem Thermostaten 4 an. Der Thermostat 4 ist von einer Handradkappe 5 umgeben, welche mit dem Haltekopf 2 an dem Gehäuse befestigt ist. An dem Haltekopf 2 ist ein Blockierring 6 angeordnet.

Der Haltekopf 2 ist im Bereich der Überwurfmutter 1 zu einem Bund 21 ausgeweitet. Am entgegengesetzten Ende des Haltekopfes 2 ist außen ein Anschlag 22 vorgesehen, der die Drehbewegungen der Handradkappe 5 begrenzt. In ein Innengewinde 23 des Haltekopfes 2 ist ein Regulierstück 24 geschraubt. Auf dem Umfang des Haltekopfes 2 ist ein Ringflansch 25 angeordnet. Innen ist in dem Haltekopf 2 ein hohl ausgebildeter Kegelstumpf 26 angeformt.

Mit Hilfe des Regulierstücks 24 ist der Temperaturbereich, in dem das Thermostat-Ventil arbeiten soll, verstellbar. Im Übrigen erfolgt die Verstellung des Fühlerstiftes mit Hilfe des Thermostaten 4. Das Regulierstück 24 weist einen Absatz 240 auf, aus dem sich innen ein Hohlzylinder 241 erhebt. Am Fuß des Hohlzylinders 241 ist in den Absatz 240 eine Ringnut 242 eingebracht. Die Ringnut 242 nimmt einen hohl ausgebildeten Ring 243 auf. Dieser besteht im Ausführungsbeispiel aus NBR 70 Shore. Er dient zum Toleranzausgleich und als Dämpfungselement. Der Ring 243 liegt am Thermostaten 4 und am Regulierstück 24 an. In Abwandlung des Ausführungsbeispiels kann der Ring 243 auch massiv ausgebildet sein. Im Innern des Regulierstücks 24 ist der Thermostat 4 gehalten und geführt. Hierzu sind an dem Regulierstück 24 - im Ausführungsbeispiel sechs - Segmente 244 vorgesehen, die den Thermostaten 4 seitlich umfassen. An den freien Enden der Segmente 244 sind auf der dem Thermostaten 4 zugewandten Seite Haltekrallen 245 angeordnet.

Außerdem ist das Regulierstück 24 an der Handradkappe 5 befestigt. Zur Befestigung der Handradkappe 5 weist das Regulierstück 24 - im Ausführungsbeispiel sechs - Zungen 246 auf. Die Zungen 246 sind auf ihrer dem Thermostaten 4 abgewandten Seite im Bereich ihrer freien Enden mit Rastnasen 247 versehen. Am Fuß von drei Segmenten 245 sind Verdrehnocken 248 angeformt. Weiterhin weist das Regulierstück 24 in seinem der Längsmittellinie zugewandten Bereich Nuten 249 auf.

Das Druckstück 3 ist in zwei gegeneinander verschraubbare Teile aufgeteilt. Den ersten Teil stellt ein Druckstößel 31 dar. Der Druckstößel 31 weist an seinem einen Ende eine Sackbohrung 311 auf, die das Formendstück 42 aufnimmt. An seinem anderen Ende ist der Druckstößel 31 in Form eines Schraubbolzens 312 ausgebildet. An dem Druckstößel 31 ist außen ein Rand 313 vorgesehen. An dem Rand 313 sind radial verlaufende Vorsprünge 314 vorgesehen. Die Vorsprünge 314 sind in den Nuten 249 des Regulierstücks 24 geführt.

Der zweite Teil besteht aus einer mit einem Boden 321 und einem Innengewinde 322 versehenen Hülse 32. Die Hülse 32 ist von dem Kegelstumpf 26 des Haltekopfes 2 geführt. An der Außenfläche des Bodens 321 liegt in vollständig montiertem Zustand der Fühlerstift an. Hierzu ist der Boden 321 der Hülse 32 außen nach Art eines mit einem Schlitz 323 versehenen Schraubkopfes ausgebildet, der mittig eine Ausnehmung für die Anlage des Fühlerstiftes aufweist.

Im Ausführungsbeispiel ist der Thermostat 4 als Flüssigkeits-Thermostat ausgebildet. Dieser Flüssigkeits-Thermostat weist außen ein Metallgehäuse 41 auf, welches einen flüssigen Dehnstoff enthält, der sein Volumen in Abhängigkeit von der Außentemperatur ändert. In der Symmetrieachse des Flüssigkeits-Thermostaten ist das mehrteilig ausgeführte Druckstück 3 vorgesehen. In diesem Bereich kann das Flüssigkeits-Thermostat 4 durch einen Faltenbalg begrenzt sein. Die innere Begrenzung bildet ein Formendstück 42, an dem das Druckstück 3 anliegt. Das Gehäuse 41 des Flüssigkeits-Thermostaten 4 ist mit einer Befestigungsrille 43 versehen, die in das Gehäuse 41 eingebracht ist und sich über den gesamten Umfang des Gehäuses erstreckt. In die Befestigungsrille 43 rasten die an dem Regulierstück 24 befindlichen Haltekrallen 245 ein, sodass der Thermostat 4 sicher gehalten ist.

Die Handradkappe 5 ist in Längsrichtung mit Öffnungen 51 für den Durchtritt der Raumluft versehen, so dass der Thermostat 4 die Temperatur des Raumes annehmen kann. Darüber hinaus rasten am Fuß der Öffnungen 51 die Rastnasen 247 des Regulierstücks 24 ein, wodurch die Handradkappe 5 an dem Regulierstück 24 gehalten ist. Im Kopf der Handradkappe 5 sind Stege 52 vorgesehen, an denen sich der Thermostat 4 abstützt. Die Stege 52 weisen an ihren dem Thermostaten 4 zugewandten Enden Ausnehmungen 53. Die Verstellung der gewünschten Raumtemperatur ausgehend von der eingestellten Solltemperatur erfolgt über die Handradkappe 5. Beim Drehen der Handradkappe 5 dreht sich auch das Regulierstück 24. Hierzu stützen sich die Verdrehnocken 248 an in der Handradkappe im Innern vorgesehenen Vorsprüngen 54 ab.

Auf dem Haltekopf 2 ist in axialer Richtung verschiebbar ein Blockierring 6 angeordnet. Er weist einen hohlzylindrischen Abschnitt 61 auf, mit dem er an dem Haltekopf 2 anliegt. Der hohlzylindrische Abschnitt 61 weist einen Absatz 611 auf, der zu Begrenzung der axialen Verschiebung auf dem Haltekopf 2 in Richtung des Gehäuses dient. Hierzu korrespondiert der Absatz 611 mit dem Ringflansch 25 des Haltekopfes 2. Der Blockierring 6 weist außen einen zweiten hohlzylindrischen Abschnitt 62 auf, der über eine Verbindung 63 mit dem Abschnitt 61 verbunden ist. Die Verbindung 63 bildet gleichzeitig die Begrenzung der axialen Verschiebung in Richtung des Thermostaten 4 durch Anlegen an der dem Gehäuse zugewandten Seite der Handradkappe 5. Der Blockierring 6 weist nicht dargestellte Nuten auf, mit denen eine Arretierung des Thermostat-Ventils möglich ist. In Abhängigkeit von der Anzahl der Nuten ist eine feinere oder gröbere Arretierungsmöglichkeit gegeben. Die Nuten korrespondieren mit einem Rastnocken 65, der in arretiertem Zustand in eine Nut "einfährt". Der Rastnocken 65 ist auf der der Längsmittellinie des Thermostat-Ventils zugewandten Seite - der Innenseite - der Handradkappe 5 an ihrem dem Gehäuse zugewandten Ende vorgesehen. Es ist darüber hinaus auch möglich, mehrere Rastnocken 65 vorzusehen. Zur genauen Einstellung des Thermostat-Ventils ist an dem Blockierring 6 ein Spitze 66 vorgesehen, die die Funktion eines Einstellpfeiles übernimmt.

## Patentansprüche

1. Thermostatventil mit einem Haltekopf (2), in das ein Regulierstück (24) geschraubt ist, welches ein Druckstück (3) aufnimmt, das einerseits an einem Fühlerstift, andererseits an einem Thermostaten (4) anliegt, wobei der Thermostat (4) von einer Handradkappe (5) umgeben ist, dadurch gekennzeichnet, dass der Thermostat (4) ein Gehäuse (41) aufweist, das mit einer Befestigungsrille (43) versehen ist, in die Haltekrallen (245) des Regulierstücks (24) einrasten.

2. Thermostatventil nach Anspruch 1, dadurch gekennzeichnet, dass die Haltekrallen (245) an Segmenten (244) angeordnet sind.

3. Thermostatventil nach Anspruch 1 oder 2, dadurch gekennzeichnet, dass das Regulierstück (24) Zungen (246) aufweist, die mit Rastnasen (247) versehen sind.

4. Thermostatventil nach einem der Ansprüche 1 bis 3, dadurch gekennzeichnet, dass in das Regulierstück (24) eine Ringnut (242) eingebracht ist, die einen Ring (243) aufnimmt.

5. Thermostatventil nach Anspruch 4, dadurch gekennzeichnet, dass der Ring (243) hohl ausgebildet ist.

6. Thermostatventil nach einem der Ansprüche 1 bis 5, dadurch gekennzeichnet, dass an dem Regulierstück (24) Verdrehnocken (248) angeformt sind, die sich an in der Handradkappe (5) vorgesehenen Vorsprüngen (54) abstützen.

7. Thermostatventil nach einem der Ansprüche 1 bis 6, dadurch gekennzeichnet, dass in dem Haltekopf (2) innen ein hohl ausgebildeter Kegelstumpf (26) angeformt ist.
